# DEMANDE DE BREVET EUROPEEN

(11) **EP 1 870 285 A1**
(43) Date de publication de la demande: **26.12.2007**
(21) Numéro de dépôt: 07301133.0
(22) Date de dépôt: 20.06.2007
(51) Int. Cl.: B60R 1/06

(54) **Dispositif de prévention contre le vol d'un rétroviseur extérieur d'un véhicule**

(30) Priorité: 23.06.2006 FR 0652635
(71) Demandeur: Peugeot Citroen Automobiles SA, 78943 Vélizy-Villacoublay Cedex (FR)
(72) Inventeur: Marc, Stéphane, 25420 Voujeaucourt (FR); Figent, Michel, 25260 Longevelle sur Doubs (FR); Villette, Thierry, 78910 Osmoy (FR)

(57) **Abrégé**

Dispositif de prévention 1 contre le vol d'un rétroviseur 2 solidaire extérieurement de la carrosserie 12 d'un véhicule 10.

Particulièrement selon l'invention, le dispositif de prévention 1 comprend un module électronique de contrôle 4 permettant de détecter un arrachement au moins partiel du rétroviseur 2 de la carrosserie 12 du véhicule 10 et de commander au moins un moyen d'avertissement 20 de l'arrachement du rétroviseur 2.

L'invention trouve son application dans le domaine de l'automobile.

## Description

La présente invention se rapporte à un dispositif de prévention contre le vol d'un rétroviseur extérieur d'un véhicule.

Il est connu du document JP61018534 un dispositif de prévention contre le vol d'un rétroviseur solidaire extérieurement de la carrosserie d'un véhicule automobile. Selon ce dispositif, une partie du rétroviseur permet de masquer au moins l'un des éléments de fixation, tels que des vis, du rétroviseur à la carrosserie du véhicule automobile pour empêcher d'accéder à l'élément de fixation masqué. Si ce dispositif rend ainsi difficile le démontage du rétroviseur, toutefois, il ne permet pas d'avertir qu'un vol ou qu'une dégradation du rétroviseur est en cours.

Le but de la présente invention est de remédier à cet inconvénient et de proposer un dispositif de prévention contre le vol d'un rétroviseur d'un véhicule automobile permettant d'avertir des personnes proches ou à distance du véhicule automobile qu'un vol ou qu'une dégradation a lieu sur le rétroviseur.

Un autre but de l'invention est de réaliser, de manière simple et économique, un dispositif de prévention contre le vol qui soit sûr et fiable.

Ces buts sont atteints avec un dispositif de prévention contre le vol d'un rétroviseur solidaire extérieurement de la carrosserie d'un véhicule, du fait qu'il comprend un module électronique de contrôle permettant de détecter un arrachement au moins partiel du rétroviseur de la carrosserie du véhicule et de commander au moins un moyen d'avertissement de l'arrachement du rétroviseur.

Avantageusement, le module de contrôle est relié électriquement à une boucle filaire normalement fermée et détecte une ouverture par rupture de la boucle lors de l'arrachement du rétroviseur de la carrosserie.

Selon un autre mode de réalisation avantageux, le module de contrôle est relié électriquement à une boucle filaire normalement ouverte et détecte une fermeture de la boucle lors de l'arrachement du rétroviseur de la carrosserie.

De préférence, le dispositif comprend un actionneur, tel qu'un interrupteur relié en série sur la boucle, situé à l'interface de fixation du rétroviseur et de la carrosserie, et permettant de fermer la boucle ouverte lors de l'arrachement du rétroviseur.

Avantageusement, la boucle comprend deux brins traversant l'interface de fixation du rétroviseur à la carrosserie du véhicule.

Il est également avantageux de prévoir la boucle fixée de façon indémontable et indestructible dans le véhicule.

Selon une construction avantageuse, la boucle normalement fermée est une boucle préexistante logée dans le rétroviseur telle qu'une boucle dans laquelle est reliée en série une résistance de dégivrage du rétroviseur.

De préférence, le module de contrôle est disposé dans le véhicule.

Avantageusement, le module de contrôle fait partie de l'ordinateur central du véhicule.

Selon un autre mode de réalisation préférentiel, le module de contrôle est logé dans le rétroviseur.

Selon une construction avantageuse, le module de contrôle est relié à un récepteur pouvant recevoir d'un émetteur un signal hertzien, lors de l'arrachement du rétroviseur, pour commander un moyen d'avertissement.

De préférence, le module de contrôle est logé dans le rétroviseur.

Avantageusement, le dispositif comprend une source d'alimentation du module de contrôle disposée dans le rétroviseur.

De façon préférentielle, le récepteur associé au module de contrôle est également logé dans le rétroviseur et l'émetteur de signaux hertziens est logé dans le véhicule.

Avantageusement, le moyen d'avertissement est de type sonore ou visuel, embarqué au véhicule ou faisant partie du rétroviseur et/ou est situé à distance du véhicule.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
- la figure 1 est une vue du dispositif de prévention contre le vol selon un premier mode de réalisation de l'invention;
- la figure 2 est une vue du dispositif de prévention contre le vol selon un troisième mode de réalisation de l'invention;
- la figure 3 est une vue du dispositif de prévention contre le vol selon un quatrième mode de réalisation de l'invention;
- la figure 4 est une vue du dispositif de prévention contre le vol selon un cinquième mode de réalisation de l'invention.

Seuls les éléments nécessaires à la compréhension de l'invention ont été représentés. Pour faciliter la lecture des dessins, les mêmes éléments portent les mêmes références d'une figure à l'autre.

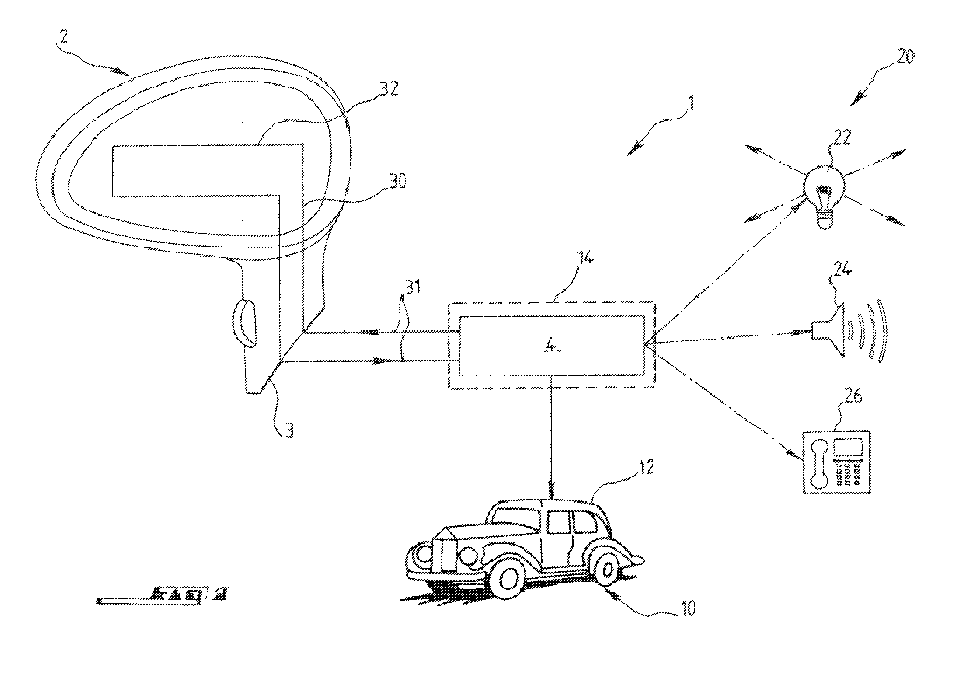

Les figures 1 à 4 représentent différents modes de réalisation de l'invention d'un dispositif de prévention 1 contre le vol d'un rétroviseur 2 solidaire extérieurement d'une partie de la carrosserie 12 d'un véhicule automobile 10 telle qu'une porte avant de ce véhicule 10, le rétroviseur 2 étant lié à la partie de carrosserie 12 du véhicule 10 par une interface de fixation 3 pouvant être constituée par une plaque d'embase de support.

Selon l'invention, le dispositif de prévention 1 comprend un module électronique de contrôle 4 permettant de détecter un arrachement au moins partiel du rétroviseur 2 de la carrosserie 12 du véhicule 10. Le module de contrôle 4 permet également de commander des moyens d'avertissement 20 de l'arrachement du rétroviseur 2.

Un tel dispositif de prévention 1 contre le vol permet d'alerter des personnes proches ou à distance du véhicule automobile 10 qu'un vol du rétroviseur 2, correspondant à un arrachement total de celui-ci, ou qu'une dégradation du rétroviseur 2, correspondant à un arrachement total ou partiel de celui-ci, est en cours. De plus, un tel dispositif de prévention 1 permet de dissuader de potentiels malfaiteurs et ainsi de limiter le nombre de vols ou de dégradations de rétroviseurs.

La figure 1 représente un premier mode de réalisation d'un dispositif de prévention 1 contre le vol selon l'invention.

Dans ce mode de réalisation, le module de contrôle 4 est disposé dans une partie du véhicule 10, notamment dans l'habitacle de celui-ci, et peut faire partie de l'ordinateur central 14 de bord du véhicule 10. En intégrant le module de contrôle 4 dans l'ordinateur central 14 de bord du véhicule 10, la construction est simplifiée, on évite d'utiliser un module indépendant simplifiant, de ce fait, la réalisation du dispositif et le rendant moins coûteux.

Le module de contrôle 4 est relié électriquement à une boucle filaire 30 normalement fermée. La boucle 30 a ses deux brins 31 traversant l'interface de fixation 3 du rétroviseur 2 à la carrosserie 12 du véhicule 10 et a sa partie de retour de boucle 32 logée dans le rétroviseur 2. Ainsi, une désolidarisation totale ou partielle du rétroviseur 2 de la carrosserie 12 du véhicule 10 a pour conséquence de rompre ou d'altérer au moins l'un des deux brins 31 de la boucle 30.

Le module de contrôle 4 est apte à détecter une ouverture par rupture de la boucle 30 lors de l'arrachement du rétroviseur 2 de la carrosserie 12 en détectant l'absence de courant électrique traversant la boucle 30.

Lors d'une détection d'ouverture de la boucle 30, le module de contrôle 4 commande un moyen d'avertissement de type sonore 24 embarqué au véhicule 10 et pouvant être constitué par le klaxon du véhicule 10 et/ou un moyen d'avertissement de type visuel 22 embarqué au véhicule 10 et pouvant être constitué par les feux de détresse du véhicule 10 et/ou un moyen d'avertissement à distance 26 du véhicule 10. Ce moyen d'avertissement 26 peut être constitué par un combiné téléphonique du propriétaire du véhicule 10 pouvant recevoir par voie hertzienne le signal d'avertissement en provenance du module de contrôle 4.

Selon un second mode de réalisation non représenté d'un dispositif de prévention contre le vol selon l'invention, le module de contrôle est relié électriquement à une boucle filaire normalement ouverte et détecte une fermeture de la boucle lors de l'arrachement du rétroviseur de la carrosserie en détectant le passage de courant électrique traversant la boucle. La boucle a ses deux brins traversant l'interface de fixation du rétroviseur à la carrosserie du véhicule et a sa partie de retour de boucle logée dans le rétroviseur.

Lors d'une détection de fermeture de la boucle, le module de contrôle commande un moyen d'avertissement de type sonore embarqué au véhicule et/ou un moyen d'avertissement de type visuel embarqué au véhicule et/ou un moyen d'avertissement à distance du véhicule. Ces moyens d'avertissement sonore et visuel, et à distance, peuvent être les mêmes que ceux mentionnées par le premier mode de réalisation.

Particulièrement dans ce mode de réalisation, le dispositif comprend un actionneur, tel qu'un interrupteur, relié en série sur la boucle, situé à l'interface de fixation du rétroviseur et de la carrosserie, et permettant de fermer automatiquement, lors de l'arrachement du rétroviseur, la boucle ouverte.

Ainsi, un courant électrique ne passe dans la boucle que lors d'une désolidarisation partielle ou totale du rétroviseur. Une telle construction permet d'éviter un gaspillage d'énergie lié à une consommation de courant électrique quasi-permanente en fonctionnement normal, comme dans le premier mode de réalisation.

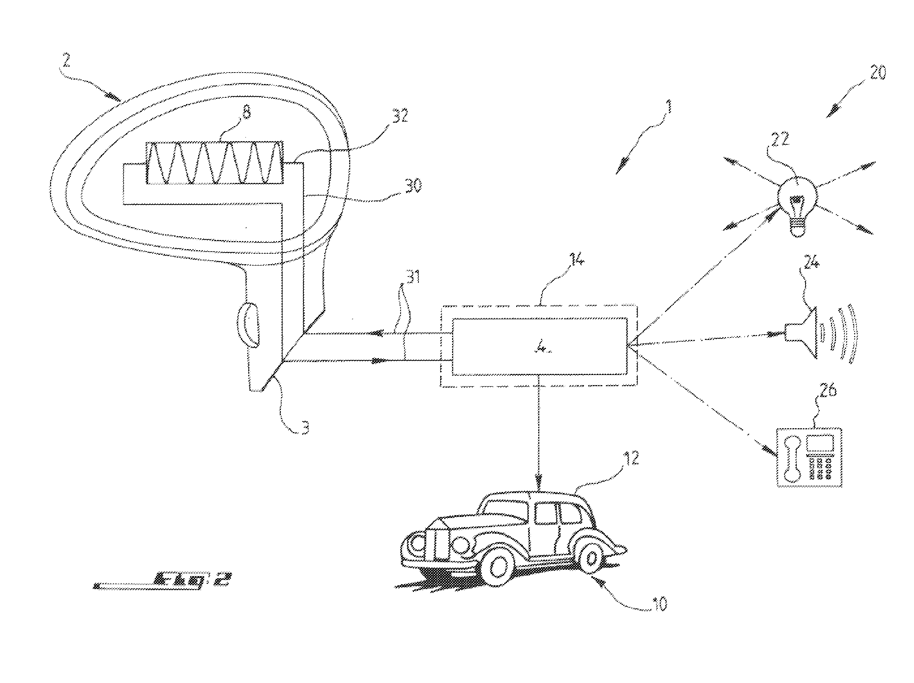

La figure 2 représente une variante de réalisation du dispositif de prévention contre le vol de la figure 1 et ne diffère du premier mode de réalisation uniquement en ce que la boucle 30 normalement fermée est une boucle préexistante logée dans le rétroviseur 2 telle qu'une boucle dans laquelle est reliée en série une résistance de dégivrage 8 du rétroviseur 2. La boucle 30 utilisée étant une boucle faisant déjà partie du véhicule 10, le dispositif de prévention 1 ne nécessite pas l'adjonction d'une boucle électrique spécifique. De ce fait, la réalisation est simplifiée et les opérations de montage du dispositif 1 sont limitées.

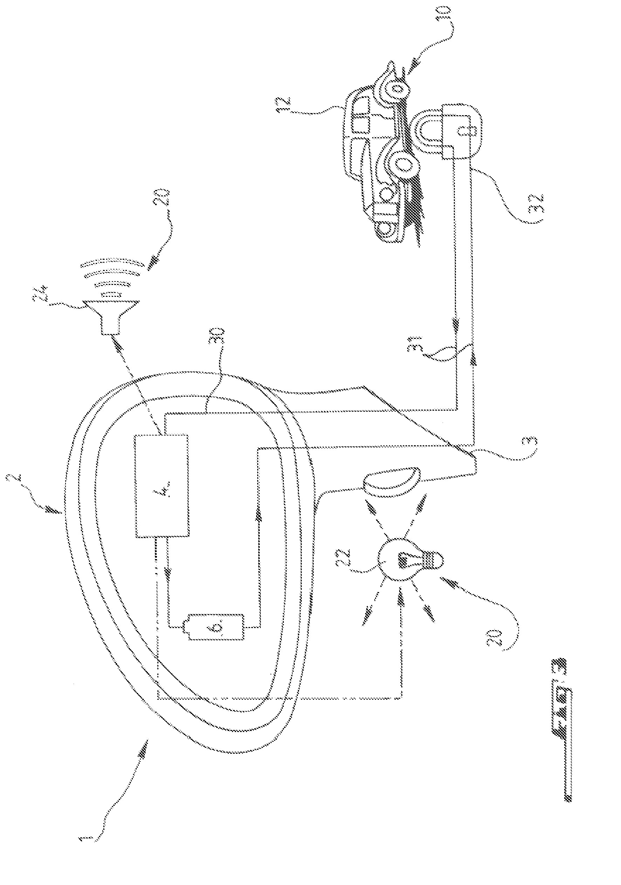

La figure 3 représente un quatrième mode de réalisation d'un dispositif de prévention 1 contre le vol selon l'invention dans lequel le module de contrôle 4 est relié électriquement à une boucle filaire 30 normalement fermée et détecte une ouverture par rupture de la boucle 30 lors de l'arrachement du rétroviseur 2 de la carrosserie 12. La boucle 30 a ses deux brins 31 traversant l'interface de fixation 3 du rétroviseur 2 à la carrosserie 12 du véhicule 10 et à sa partie de retour de boucle 32 logée dans une partie de la carrosserie 12 du véhicule 10.

Selon ce mode de réalisation, le module de contrôle 4 est logé dans le rétroviseur 2, et la boucle 30 est fixée de façon indémontable et indestructible dans le véhicule 10. Ainsi, il est impossible d'emporter l'ensemble du rétroviseur 2 et de la boucle 30 du fait qu'un arrachement du rétroviseur 2 provoque systématiquement une rupture de la boucle 30 qui reste à demeure dans le véhicule 10.

Le dispositif 1 comprend une source d'alimentation 6 du module de contrôle 4 également disposée dans le rétroviseur 2. Ainsi, le module de contrôle 4 peut être alimenté et fonctionner en cas de désolidarisation du rétroviseur 2 de la carrosserie 12 du véhicule 10.

Lors d'une détection d'ouverture de la boucle 30, le module de contrôle 4 commande un moyen d'avertissement de type sonore 24 pouvant faire partie du rétroviseur 2 et/ou un moyen d'avertissement de type visuel 22 pouvant faire partie du rétroviseur 2.

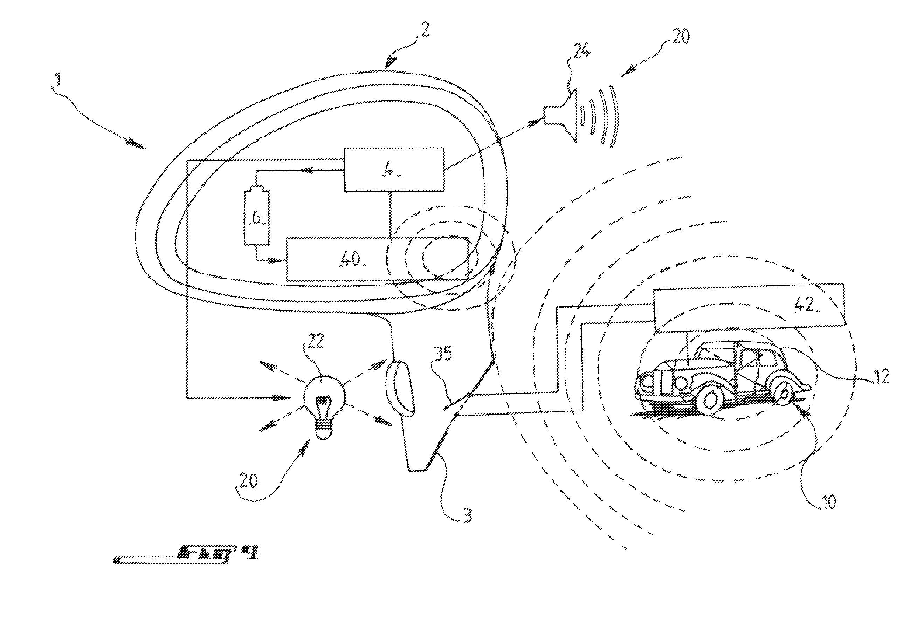

La figure 4 représente un cinquième mode de réalisation d'un dispositif de prévention 1 contre le vol selon l'invention.

Selon ce mode de réalisation, le module de contrôle 4 est relié à un récepteur 40 pouvant recevoir d'un émetteur 42 un signal hertzien lors de l'arrachement du rétroviseur 2 pour commander un moyen d'avertissement 20. Ainsi, le module de contrôle 4 détecte un arrachement au moyen d'un système de transmission non filaire.

L'émetteur 42 a une portée suffisante telle qu'en cas d'arrachement du rétroviseur 2, le récepteur 40 puisse recevoir des signaux de l'émetteur 42.

Le module de contrôle 4 est logé dans le rétroviseur 2. Le récepteur 40 associé au module de contrôle 4 est également logé dans le rétroviseur 2 et l'émetteur 42 de signaux hertziens est logé dans le véhicule 10, de préférence, en un emplacement inaccessible. Lors de la réception d'un signal hertzien indiquant un arrachement du rétroviseur 2, le module de contrôle 4 commande un moyen d'avertissement de type sonore 24 pouvant faire partie du rétroviseur 2 et/ou un moyen d'avertissement de type visuel 22 pouvant faire partie du rétroviseur 2.

Comme pour le quatrième mode de réalisation, le dispositif 1 comprend une source d'alimentation 6 du module de contrôle 4 disposée dans le rétroviseur 2.

Le dispositif 1 comprend un actionneur 35 pouvant être situé à l'interface de fixation 3 du rétroviseur 2 et de la carrosserie 12 du coté du véhicule 10. Cet actionneur 35 permet de déclencher l'émetteur 42 lors de l'arrachement du rétroviseur 2 pour transmettre au récepteur 40 le signal hertzien permettant de déclencher le moyen d'avertissement 22 de type visuel et/ou le moyen d'avertissement 24 de type sonore.

Selon une variante de réalisation de ce cinquième mode de réalisation, le dispositif 1 pourra également fonctionner en prévoyant un émetteur 42 fournissant en permanence des signaux hertziens au récepteur 40 suivant une portée très limitée telle qu'en arrachant le rétroviseur 2 de la carrosserie 12 du véhicule 10, le récepteur 40 ne reçoive plus de signaux de l'émetteur 42 et commande alors au moins un moyen d'avertissement 20.

Bien évidemment, le dispositif de l'invention peut être appliqué à un camion ou à un véhicule à deux roues possédant un rétroviseur extérieur, tel qu'un scooter.

## Revendications

1. Dispositif de prévention (1) contre le vol d'un rétroviseur (2) solidaire extérieurement de la carrosserie (12) d'un véhicule (10), **caractérisé en ce qu'**il comprend un module électronique de contrôle (4) permettant de détecter un arrachement au moins partiel du rétroviseur (2) de la carrosserie (12) du véhicule (10) et de commander au moins un moyen d'avertissement (20) de l'arrachement du rétroviseur (2).

2. Dispositif selon la revendication 1, **caractérisé en ce que** le module de contrôle (4) est relié électriquement à une boucle filaire (30) normalement fermée et détecte une ouverture par rupture de la boucle (30) lors de l'arrachement du rétroviseur (2) de la carrosserie (12).

3. Dispositif selon la revendication 1, **caractérisé en ce que** le module de contrôle (4) est relié électriquement à une boucle filaire (30) normalement ouverte et détecte une fermeture de la boucle (30) lors de l'arrachement du rétroviseur (2) de la carrosserie (12).

4. Dispositif selon la revendication 3, **caractérisé en ce qu'**il comprend un actionneur, tel qu'un interrupteur relié en série sur la boucle (30), situé à l'interface de fixation (3) du rétroviseur (2) et de la carrosserie (12), et permettant de fermer la boucle (30) ouverte lors de l'arrachement du rétroviseur (2).

5. Dispositif selon l'une des revendications 2 à 4, **caractérisé en ce que** la boucle (30) comprend deux brins (31) traversant l'interface de fixation (3) du rétroviseur (2) à la carrosserie (12) du véhicule (10).

6. Dispositif selon l'une des revendications 2 à 5, **caractérisé en ce que** la boucle (30) est fixée de façon indémontable et indestructible dans le véhicule (10).

7. Dispositif selon la revendication 2, **caractérisé en ce que** la boucle (30) normalement fermée est une boucle (30) préexistante logée dans le rétroviseur (2) telle qu'une boucle (30) dans laquelle est reliée en série une résistance de dégivrage (8) du rétroviseur (2).

8. Dispositif selon l'une des revendications précédentes, **caractérisé en ce que** le module de contrôle (4) est disposé dans le véhicule (10).

9. Dispositif selon la revendication 8, **caractérisé en ce que** le module de contrôle (4) fait partie de l'ordinateur central (14) du véhicule (10).

10. Dispositif selon une des revendications 1 à 7, **caractérisé en ce que** le module de contrôle (4) est logé dans le rétroviseur (2).

11. Dispositif selon la revendication 1, **caractérisé en ce que** le module de contrôle (4) est relié à un récepteur (40) pouvant recevoir d'un émetteur (42) un signal hertzien, lors de l'arrachement du rétroviseur (2), pour commander un moyen d'avertissement (20).

12. Dispositif selon la revendication 11, **caractérisé en ce que** le module de contrôle (4) est logé dans le rétroviseur (2).

13. Dispositif selon l'une des revendications 10 ou 12, **caractérisé en ce que** le dispositif comprend une source d'alimentation (6) du module de contrôle (4) disposée dans le rétroviseur (2).

14. Dispositif selon la revendication 12, **caractérisé en ce que** le récepteur (40) associé au module de contrôle (4) est également logé dans le rétroviseur (2) et l'émetteur (42) de signaux hertziens est logé dans le véhicule (10).

15. Dispositif selon une des revendications précédentes, **caractérisé en ce que** le moyen d'avertissement (20) est de type sonore ou visuel, embarqué au véhicule (10) ou faisant partie du rétroviseur (2) et/ou est situé à distance du véhicule (10).
